# EUROPEAN PATENT SPECIFICATION

(11) **EP 1 778 445 B1**
(45) Date of publication and mention of the grant of the patent: **24.12.2008**
(21) Application number: 05722208.5
(22) Date of filing: 14.03.2005
(51) Int. Cl.: B27G 11/00, B27M 3/00, B05C 1/08

(54) **PROCESS AND MEANS FOR APPLICATION OF A CURING ADHESIVE SYSTEM**
VERFAHREN UND MITTEL ZUM AUFBRINGEN EINES AUSHÄRTENDEN KLEBSTOFFSYSTEMS
PROCEDE ET DISPOSITIF D'APPLICATION D'UNE COMPOSITION ADHESIVE DURCISSANTE

(30) Priority: 16.03.2004 EP 04006213
(43) Date of publication of application: 02.05.2007
(73) Proprietor: Akzo Nobel Coatings International BV, 6800 SB Arnhem (NL)
(72) Inventor: VERSTERLUND, Lennart, S-141 71 Segeltorp (SE); WASNIEWSKI, Janusz, S-182 47 Enebyberg (SE)
(74) Representative: Holmberg, Martin Tor
(86) International application number: PCT/SE2005/000362
(87) International publication number: WO 2005/087461

(56) References cited:
- EP-A- 0 117 420
- EP-A- 1 243 345
- DE-A- 4 135 727
- DE-U- 29 806 498
- US-A- 3 762 366

## Description

### FIELD OF INVENTION

The present invention refers to a process for production of laminated wood, specifically so called edge glued panels, by gluing the vertical joint surfaces of elongate wood pieces using a curing adhesive system comprising at least a resin and a hardener, and by which the resin and hardener are separately applied to opposite vertical sides, respectively, of the wood pieces that are advanced through an apparatus used in the process. The invention also refers to the apparatus for separately applying resin and hardener components of a curing adhesive system to opposite vertical sides of the wood pieces.

### BACKGROUND OF THE INVENTION

The term "adhesive system" as used herein refers to a curing formulation of a resin and a hardener component, and other suitable additives if appropriate. In the production of laminated structures using curing adhesive systems, curing time is a critical factor. It is common, in connection with fast-curing adhesive systems, to avoid pre-curing by separately applying resin and hardener to a joint surface on which the components mix before assembly. An even better utilization of fast curing adhesive systems may be obtained if the resin and hardener are kept separate until assembly of the joint, by applying resin to a first joint surface and hardener to the opposite joint surface.

In the production of edge glued panels by joining together wood pieces side by side, the adhesive system is applied to joints that are vertically oriented with respect to the major, horizontal dimension of the assembled panel. Conventionally, the wood pieces are individually conveyed through an applicator station where the adhesive system is applied, and further conveyed to be assembled on a horizontal press table. It is previously known in the production of edge glued panels to apply the resin and hardener separately. Typically, a hardener of comparatively low viscosity is applied to the joint surface by spraying, and the resin being applied by spraying, or being released to the surface from a resin applicator roll. Spraying however gives rise to hygienic problems and losses due to splashing, and additionally the usually acid hardener component may cause corrosion on equipment, which constitutes a problem by itself. Also, spraying requires frequent cleaning of nozzles, and an even distribution of adhesive components may be difficult to obtain by spraying, due to clogging.

### SUMMARY OF THE INVENTION

The present invention aims to avoid these problems and to provide a process as well as means for the production of laminated wood, specifically edge glued panels, in which the advantages of fast-curing adhesive systems are better utilized.

One object of the present invention is to provide a process and an apparatus by which resin and hardener of a curing adhesive system are kept separated until assembly of the wood pieces to form an edge glued panel having vertical joints, avoiding the problem of pre-curing.

Another object of the present invention is to provide a process and an apparatus by which resin and hardener are released from rolls to the opposing vertical joint surfaces of wood pieces to be included in an edge glued panel, avoiding the problems of splashing and airborne spray particles.

Yet another object of the present invention is to provide an apparatus of compact structure for release and non-release, respectively, of resin and hardener from vertical rolls to the opposite vertical joint surfaces of a wood piece to be included in an edge glued panel.

Still another object of the present invention is to provide a process in which the hardener is adapted to be released from a vertical roll to a joint surface in the production of edge glued panels.

The method and the apparatus of the invention are defined in the appended claims.

Briefly, the process and the apparatus of the present invention are concerned with the production of laminated wood, specifically edge glued panels, by gluing the vertical joint surfaces of elongate wood pieces using a curing adhesive system comprising at least a resin and a hardener, and in which wood pieces are individually conveyed through an apparatus wherein resin is applied separately to a first joint surface and hardener is applied separately to the opposite joint surface such that resin and hardener are mixed at the joint upon assembly of the wood pieces. The process comprises the steps of releasing resin from a resin applicator roll which is driven to rotate about a first vertical axis, and releasing hardener from a hardener applicator roll which is driven to rotate about a second vertical axis, while controlling the resin and hardener applicator rolls between alternate positions for release and non-release, respectively, in cooperation with counter-pressure rolls that are associated with the applicator rolls.

The apparatus of the present invention comprises a conveyor arranged to feed individual wood pieces longitudinally through the apparatus; a resin applicator roll driven to rotate about a first vertical axis and operative to release resin to a first joint surface of the wood piece; a hardener applicator roll driven to rotate about a second vertical axis and operative to release hardener to the opposite joint surface of the wood piece; counter-pressure rolls associated with the resin and hardener applicator rolls, respectively, and control means for shifting the applicator rolls and counter-pressure rolls between release and non-release positions, respectively, wherein each applicator roll is associated with a counter-pressure roll, the rolls being journalled on a common axis and controllable for a vertical displacement to enable shifting in axial direction between a release position and a non-release position.

Embodiments of the process and apparatus of the invention are further defined in the subordinated claims.

### SHORT DESCRIPTION OF THE DRAWINGS

The invention is more closely explained below with reference to the diagrammatic drawings. In the drawings,
Fig. 1 illustrates a process for production of edge glued panels by joining together the vertical sides of elongate wood pieces, viewed from above. The apparatus shown in this figure is not in itself a claimed apparatus of the invention.
Fig. 2 is a sectional view through an applicator station, transversely to a feed direction of the wood pieces;
Fig. 3 shows alternative positions of applicator rolls and counter-pressure rolls in the applicator station of fig. 2;
Fig. 4 is a phantom drawing showing a roll assembly, and
Fig. 5 is a longitudinal section through a roll.

### DETAILED DESCRIPTION OF THE INVENTION

An adhesive system suitable for the present process may be, for example, a urea-formaldehyde (UF) resin gluing system, a melamine-formaldehyde (MF) resin gluing system, a melamine-urea-formaldehyde (MUF) resin gluing system, a phenol-resorcinol-formaldehyde (PRF) resin gluing system, a polyvinyl acetate gluing system, and various combinations of two or more of these gluing systems.

A hardener typically comprises an aqueous solution or dispersion of an acid or acid-forming substance as curing agent. Suitable curing agents are phosphoric acid, trichloroacetic acid, maleic acid, citric acid, formic acid, aluminum sulfate, and ammonium chloride, e.g. Selection of curing agent is made with respect to desired curing time or rapidity of the hardener. In combination with the resin, the curing time can vary within wide limits, for example, from about 1 minute to about 5 hours at room temperature (about 20°C).

Conventionally, in a process wherein an adhesive system is applied to vertical surfaces of a glue joint, the viscosity of the hardener is kept low to allow application through a spraying nozzle.

In one embodiment of a process according to the present invention the hardener is modified in order to facilitate release of the hardener from a vertically oriented applicator roll. Specifically, the viscosity of the hardener may be adapted to form a layer of continuous thickness about the cylinder periphery of the vertical roll. In this respect, the viscosity of the hardener may be adjusted to facilitate a complete and even coating of the hardener applicator roll also in an axial/vertical direction, while avoiding an ejection of the fluid hardener radially from the rotating roll. In operation, the peripheral velocity of the roll may range up to about 200 m/min or more while releasing hardener to the joint surface at an amount ranging from about 15 to about 70 g/m², e.g. In the case of a very low viscosity the hardener may not be able to climb the vertical wall of the roll, whereas in case of a very high viscosity the hardener may be separated from the roll surface by centrifugal forces. In this connection, a thickener such as polyvinyl alcohol, polyvinyl acetate or mixtures thereof, may be added to provide the hardener a viscosity ranging from about 1,000 to about 7,000 mPa-sec, preferably within about 2,000 to about 4,000 mPa-sec (by Brookfield, LVT spindle 4, 12 rpm at 25°C).

The resin may typically be applied to the joint surface at an amount of 30-300 g/m².

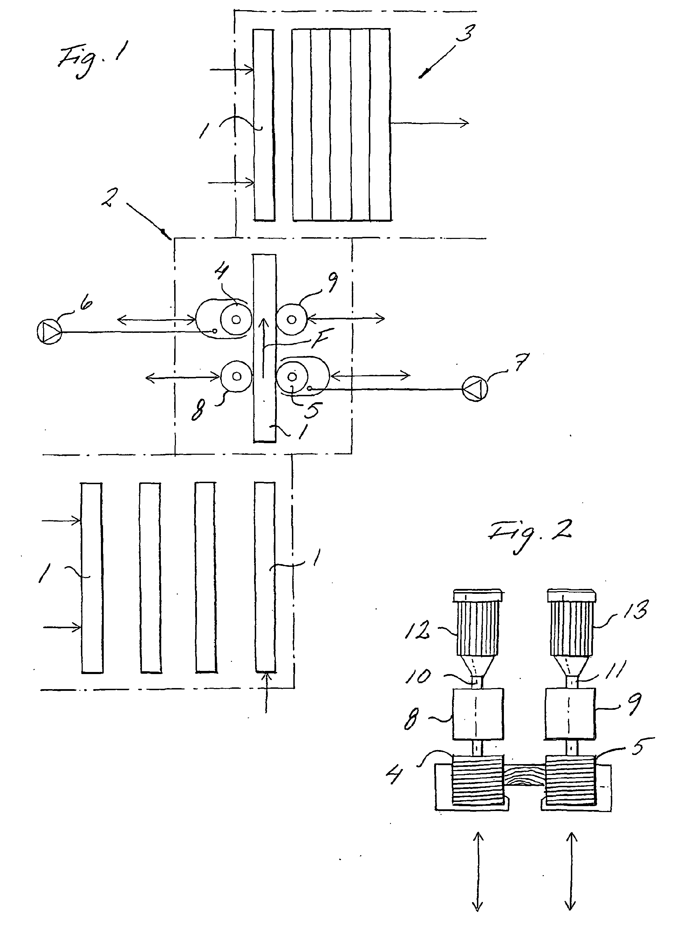

A production line is diagrammatically illustrated from above in fig. 1, showing elongate wood pieces 1 being advanced in succession from an in-feed end at the left hand side of the drawing, towards an applicator station 2. The wood pieces are individually conveyed through the applicator station, where the adhesive system is released to vertically oriented sides of the wood pieces. Typically, a band conveyor may be arranged for feeding the wood pieces through the applicator station 2. After gluing, the wood pieces are assembled to form a laminated wood board 3, or an edge glued panel, having glue joints of a vertical orientation with respect to a major horizontal dimension of the board and which is further advanced to a press (not shown), towards the right hand side of the drawing.

In the applicator station 2, wood pieces are guided longitudinally into a gap that is formed between a resin applicator roll 4 driven to rotate about a first vertical axis, and a hardener applicator roll 5 driven to rotate about a second vertical axis. The resin applicator roll 4 is associated with pump means 6, supplying the resin component. Correspondingly, the hardener applicator roll 5 is associated with pump means 7, supplying the hardener component.

Applicator rolls 4 and 5 are driven to rotate about their vertical axis, in contact with opposite joint surfaces of the wood pieces as these are conveyed through the gap, such that the resin applicator roll 4 releases resin to one vertical side and the hardener applicator roll 5 releases hardener to the opposite vertical side of the wood pieces. In fig. 1, each applicator roll 4,5 is associated with counter pressure rolls 8 and 9, respectively, cooperating with the applicator rolls to provide counter pressure for balancing the contact pressure that is applied from the applicator rolls upon release of resin or hardener to the joint surfaces. The counter-pressure rolls may be idling, or driven at speeds that are synchronized with the rotation of the applicator rolls. The applicator rolls, as well as the counter-pressure rolls, may be dimensioned to have a diameter of 100-150 mm, e.g., and driven at speeds ranging up to about 400 rpm.

In fig. 1, resin and hardener applicator rolls 4 and 5 are oppositely arranged at longitudinally spaced positions, as seen in the feed direction F of the wood pieces. An alternative and more compact structure is shown in fig. 2, which is a preferred embodiment of an apparatus of the invention, wherein the applicator rolls 4,5 are oppositely arranged on a line transversely to the feed direction.

In fig. 2 , showing a wood piece 1 from an end view, each applicator roll 4,5 is associated with a counter-pressure roll 8 and 9, respectively, jointly supported on a common axis 10 or 11. Drive means 12,13 are provided to drive the applicator rolls and counter-pressure rolls for co-rotation about the axes 10 and 11, respectively. In this embodiment, the diameters of applicator and counter-pressure rolls on a common axis are equally dimensioned.

Returning to fig. 1, the applicator rolls 4,5 and counter-pressure rolls 8,9 are separately journalled and displaceable laterally and transversely to the vertical roll axes and controllable in a horizontal plane, i.e. in a radial direction of the rolls, to be brought in contact with the vertical sides of the wood pieces for release of resin/hardener, or out of contact for leaving either side uncoated (non-release) as desired with respect to the outermost members included in an edge glued panel.

In fig. 2, the assemblies of applicator rolls and counter-pressure rolls coaxially supported on common axes are vertically displaceable transversely to the feed direction and controllable in axial direction of the rolls for release and non-release of resin or hardener.

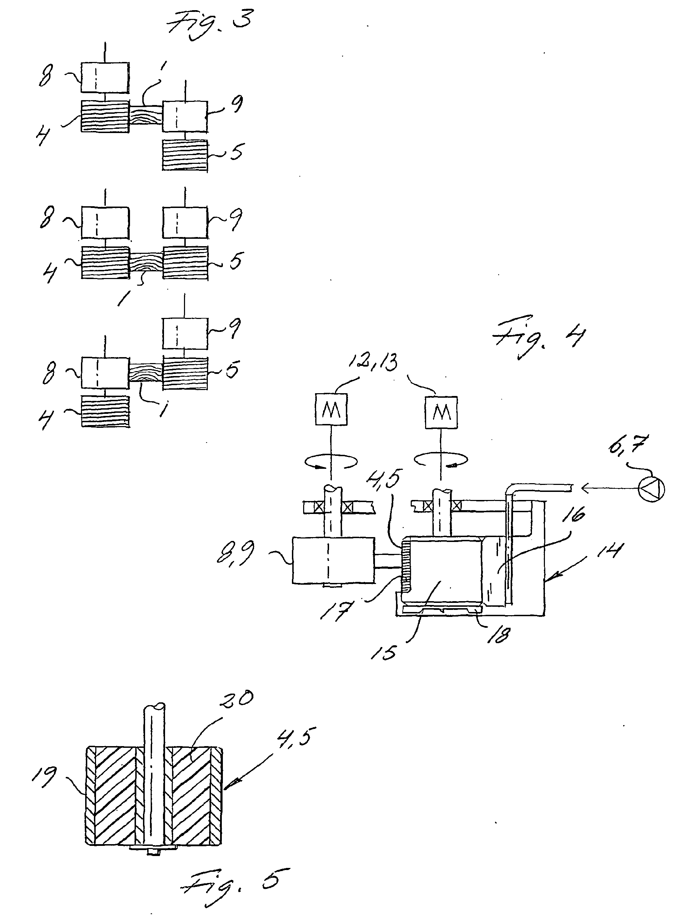

Fig. 3 illustrates the possible operative positions of the assemblies of fig. 2. In the uppermost position, resin alone is released to a left vertical side of the wood piece 1 from a resin applicator roll 4 of the left hand assembly, and counter pressure is provided from the counter-pressure roll 9 of the opposite assembly which is lowered with respect to the wood piece. In the centre position both assemblies are leveled with the wood piece, such that resin is released from the applicator roll 4 of the left hand assembly while hardener is simultaneously released from the applicator roll 5 of the opposite assembly. In the lowermost position, the left hand assembly is lowered to provide counter pressure while the applicator roll 5 of the opposite assembly releases hardener alone to the right side of the wood piece.

A linear, lateral or vertical displacement of the rolls or the roll assemblies may be driven pneumatically, hydraulically or electrically, and guided by structural elements included in a frame structure defining the applicator station 2. Advantageously, pneumatic or hydraulic cylinder units may be arranged in the frame structure and controllable for shifting movements between release and non-release positions, by operatively engaging a rotary mounting for the roll axis and which is supported to slide on guides arranged on the frame.

Programmable control means may be arranged to operate the cylinders and thereby to shift the applicator and counter-pressure rolls between the release and non-release positions in response to an output signal from a counter which monitors the number of wood pieces being conveyed through the applicator station.

Fig. 4 illustrates the feed of adhesive component to the cylinder surface of applicator rolls 4,5. The adhesive component, such as resin or hardener which are kept separate until assembly of the wood pieces, is supplied via pump means and conduits to a bottom region of a vessel 14. The vessel 14 has a vertical wall 15 substantially enveloping the applicator roll 4,5, a clearance in the wall leaving a portion of the roll surface free for contact with the wood piece 1. The lower end of the applicator roll reaches down into a volume of adhesive component, resting on the bottom of vessel 14. Level gauging means preferably are arranged in the vessel to control the level of adhesive component received by the vessel. A scraper 16 runs vertically adjacent to the applicator roll, an edge of the scraper sliding on the roll surface as the roll rotates about its axis 10,11. The lower end of scraper 16 reaches down into the volume of adhesive component. The vessel 14 is rotatable but axially affixed relative to the applicator roll or roll axis, and movable with the applicator roll between release and non-release positions, respectively. The cylindrical surface of applicator roll 4,5 has a rifling 17 rising helically about the roll surface. As the roll is driven for rotation, the adhesive component is captured and forced by the sliding scraper edge to climb the helical rifling, filling the roll surface with adhesive component that is subsequently released to a vertical joint surface. An agitator 18 may be arranged in the lower end of applicator roll 4,5, co-rotating with the roll near the bottom of the vessel for mixing the substances included in the adhesive component and this way maintaining the homogeneity of the component.

Alternatively, and preferably in connection with more fluid hardeners at lower viscosities, hardener may be supplied to the roll surface at an upper region of the hardener applicator roll 5. In this embodiment, not shown in the drawings, hardener is supplied at the upper margin of the cylinder surface. For example, the hardener may be supplied directly or indirectly via a conduit or other distributor means that mouths at the upper end of the vertical hardener applicator roll. Excessive hardener may be collected below the roll, and pump means are suitably arranged for circulation of the hardener. A scraper 16 may be arranged to enhance distribution of the hardener in a descending coating of the roll surface.

The applicator rolls may be cylinders made of metal such as steel, or made of synthetic materials, elastic or non-elastic in a radial direction of the rolls. Preferably the applicator rolls are structured to release the adhesive components radially under an elastic contact with the wood pieces to ensure continuous wetting and filling of the joint surface, also in the event of possible irregularities in the surface. Elasticity in the radial direction may be provided through an elastic support of the roll axes, or by designing the rolls to have an inherent elasticity. For example, a steel or metal cylinder may be surrounded by an elastic envelope. Alternatively, and illustrated in fig. 5, a composite roll has a rigid jacket 19 enveloping a flexible core 20. For example, the jacket may be a steel cylinder and the core a rubber or polymer composition, the core having a Shore A hardness of approximately 30-70°, e.g. Alternatively, the rolls may be assembled or integrally formed entirely from nature rubber, synthetic rubber or polymer material, such as nitrile rubber, diene rubber (EPDM), Hypalon^{®}, etc. The elasticity may be provided through corresponding structure of the applicator rolls 4,5, or/and of the counter-pressure rolls 8,9.

Thus there has been disclosed an improved process and means for applying a curing adhesive system to vertical joint surfaces, avoiding the drawbacks of spraying. The claimed invention is defined through the features listed in the appended claims.

## Claims

1. A process for production of laminated wood being edge glued panels, by gluing the vertical joint surfaces of elongate wood pieces using a curing adhesive system comprising at least a resin and a hardener, and in which wood pieces are individually conveyed through an applicator station wherein resin is applied separately to a first joint surface and hardener is applied separately to the opposite joint surface such that resin an hardener are mixed at the joint upon assembly of the wood pieces,
**characterised in that**
the process comprises the following steps:
- releasing resin, to said first joint surface, from a resin applicator roll (4) which is driven to rotate about a first vertical axis;
- releasing hardener, to said opposite joint surface, from a hardener applicator roll (5) which is driven to rotate about a second vertical axis;
- providing counter pressure from counter-pressure rolls arranged to cooperate with the applicator rolls, and
- controlling the applicator rolls and counter-pressure rolls to be shifted between alternate positions for release and non-release of resin or hardener, respectively.

2. The process of claim 1, **characterised in that** the applicator rolls and counter-pressure rolls are shifted through a lateral displacement in radial directions between release and non-release positions.

3. The process of claim 1, **characterised in that** the applicator rolls and counter-pressure rolls are shifted through a vertical displacement in axial directions between release and non-release positions.

4. The process of claim 2, **characterised in that** resin and hardener are released at longitudinally spaced apart positions with respect to a feed direction of the wood pieces.

5. The process of claim 3, **characterised in that** resin and hardener are released at mutually opposite positions, transversely to a feed direction of the wood pieces.

6. The process of claim 3 or 5, **characterised in that** resin alone is released to said first joint surface in cooperation with a counter-pressure roll (9) which is coaxial with the hardener applicator roll (5) and co-rotating therewith, while hardener alone is released to said opposite joint surface in cooperation with a counter-pressure roll (8) that is coaxial with the resin applicator roll (4) and co-rotating therewith.

7. The process of any claim 1-6, **characterised in that** the hardener is modified to have a viscosity ranging from about 1,000 to about 7,000 mPa-sec, preferably within about 2,000 to about 4,000 mPa-sec, by the addition of a thickener agent.

8. The process of claim 7, **characterised in that** the hardener is modified through the addition of polyvinyl alcohol, or polyvinyl acetate, or mixtures thereof.

9. An apparatus for production of laminated wood being edge glued panels, the apparatus comprising a conveyor arranged to feed individual wood pieces longitudinally through the apparatus, **characterised in that** it further comprises
- a resin applicator roll (4), driven to rotate about a first vertical axis and operative to release resin to a first vertical joint surface of a wood piece conveyed through the apparatus,
- a hardener applicator roll (5), driven to rotate about a second vertical axis and operative to release hardener to a vertical joint surface opposite to said first vertical joint surface, the resin and hardener applicator rolls thus being arranged to apply resin and hardener separately to said joint surfaces such that resin and hardener are mixed in the joint only upon assembly of the wood pieces;
- counter-pressure rolls (8,9) cooperating with the resin and hardener applicator rolls, and
- control means for shifting the applicator rolls and counter-pressure rolls between alternate positions for release and non-release of resin or hardener, wherein each applicator roll is associated with a counter-pressure roll, the associated applicator and counter pressure rolls being journalled on a common axis and controllable for a vertical displacement to enable shifting in axial direction between a release position and a non-release position, respectively.

10. The apparatus of claim 9, **characterised in that** the resin and hardener applicator rolls are controllable to be shifted for simultaneous release of resin and hardener at mutually opposite positions of the wood piece.

11. The apparatus of claim 9, **characterised in that** each applicator roll is associated with a vessel (14) holding resin or hardener, the vessel being rotatable relative to the roll axis (10,11) and axially affixed relative thereto, and movable with the applicator roll between release and non-release positions.

12. The apparatus of any previous claim 9-11, **characterised in that** the applicator and/or counter-pressure rolls are elastic in a radial direction, by structure or by choice of material.

13. The apparatus of claim 12, **characterised in that** the applicator and/or counter-pressure rolls are formed with a rigid jacket (19) enveloping a flexible core (20), the jacket preferably being a steel jacket and the core preferably being a nature rubber, a synthetic rubber or a polymer composition core.

14. The apparatus of any previous claim 9-13, **characterised in that** an agitator (18) is arranged for co-rotation with the applicator rolls (4,5), near a bottom of the vessel (14).

## Patentansprüche

1. Verfahren zur Herstellung von Schichtholz, bei dem es sich um kantenverleimte Platten handelt, durch Verleimen der vertikalen Verbindungsflächen länglicher Holzteile unter Verwendung eines aushärtenden Klebstoffsystems, das mindestens ein Harz und einen Härter umfasst, und bei dem Holzteile einzeln durch eine Auftragsstation geführt werden, wobei Harz getrennt auf eine erste Verbindungsfläche aufgebracht wird und Härter getrennt auf die gegenüberliegende Verbindungsfläche aufgebracht wird, so dass sich Harz und Härter beim Zusammenfügen der Holzteile an der Verbindungsstelle vermischen,
**dadurch gekennzeichnet, dass**
das Verfahren die folgenden Schritte umfasst:
- Abgabe von Harz an die erste Verbindungsfläche aus einer Harzauftragswalze (4), die so angetrieben wird, dass sie um eine erste vertikale Achse rotiert;
- Abgabe von Härter an die gegenüberliegende Verbindungsfläche aus einer Härterauftragswalze (5), die so angetrieben wird, dass sie um eine zweite vertikale Achse rotiert;
- Bereitstellen eines Gegendrucks aus Gegendruckwalzen, die so angeordnet sind, dass sie mit den Auftragswalzen zusammenwirken, und
- Steuern der Auftragswalzen und Gegendruckwalzen, um sie zwischen abwechselnden Positionen für die Abgabe und Nichtabgabe von Harz bzw. Härter zu verschieben.

2. Verfahren nach Anspruch 1, **dadurch gekennzeichnet, dass** die Auftragswalzen und Gegendruckwalzen durch eine laterale Versetzung in radialer Richtung zwischen Abgabe- und Nichtabgabe-Positionen verschoben werden.

3. Verfahren nach Anspruch 1, **dadurch gekennzeichnet, dass** die Auftragswalzen und Gegendruckwalzen durch eine vertikale Versetzung in axialer Richtung zwischen Abgabe- und Nichtabgabe-Positionen verschoben werden.

4. Verfahren nach Anspruch 2, **dadurch gekennzeichnet, dass** Harz und Härter an in Längsrichtung beabstandeten Positionen bezogen auf eine Zufuhrrichtung der Holzteile abgegeben werden.

5. Verfahren nach Anspruch 3, **dadurch gekennzeichnet, dass** Harz und Härter an einander gegenüberliegenden Positionen, quer zu einer Zufuhrrichtung der Holzteile, abgegeben werden.

6. Verfahren nach Anspruch 3 oder 5, **dadurch gekennzeichnet, dass** Harz allein an die erste Verbindungsfläche, die mit einer Gegendruckwalze (9) zusammenwirkt, welche koaxial zur Härterauftragswalze (5) angeordnet ist und mit dieser zusammen rotiert, abgegeben wird, während Härter allein an die gegenüberliegende Verbindungsfläche, die mit einer Gegendruckwalze (8) zusammenwirkt, welche koaxial zu der Harzauftragswalze (4) angeordnet ist und mit dieser zusammen rotiert, abgegeben wird.

7. Verfahren nach einem der Ansprüche 1 bis 6, **dadurch gekennzeichnet, dass** der Härter durch Zugabe eines Verdickungsmittels so modifiziert wird, dass er eine Viskosität im Bereich von etwa 1.000 bis etwa 7.000 mPa·s, vorzugsweise von etwa 2.000 bis etwa 4.000 mPa·s, aufweist.

8. Verfahren nach Anspruch 7, **dadurch gekennzeichnet, dass** der Härter durch die Zugabe von Polyvinylalkohol oder Polyvinylacetat oder Gemischen davon modifiziert wird.

9. Vorrichtung zur Herstellung von Schichtholz, bei dem es sich um kantenverleimte Platten handelt, wobei die Vorrichtung eine Fördereinrichtung umfasst, die so angeordnet ist, dass sie einzelne Holzteile in Längsrichtung durch die Vorrichtung führt, **dadurch gekennzeichnet, dass** sie weiter
- eine Harzauftragswalze (4), die so angetrieben wird, dass sie um eine erste vertikale Achse rotiert und bei Betrieb Harz an eine erste vertikale Verbindungsfläche eines durch die Vorrichtung geführten Holzteils abgibt;
- eine Härterauftragswalze (5), die so angetrieben wird, dass sie um eine zweite vertikale Achse rotiert, und bei Betrieb Härter an eine vertikale Verbindungsfläche, die der ersten vertikalen Verbindungsfläche gegenüberliegt, abgibt, so dass die Harz- und Härterauftragswalzen so angeordnet sind, dass Harz und Härter getrennt auf die Verbindungsflächen aufgebracht werden, so dass sich Harz und Härter an der Verbindungsstelle nur beim Zusammenfügen der Holzteile vermischen;
- Gegendruckwalzen (8, 9), die mit den Harz- und Härterauftragswalzen zusammenwirken, und
- Steuervorrichtungen für das Verschieben der Auftragswalzen und Gegendruckwalzen zwischen abwechselnden Positionen für die Abgabe und Nichtabgabe von Harz oder Härter, wobei jede Auftragswalze mit einer Gegendruckwalze in Verbindung steht, wobei die damit in Verbindung stehenden Auftrags- und Gegendruckwalzen auf einer gemeinsamen Achse gelagert sind und für eine vertikale Versetzung steuerbar sind, um ein Verschieben in axialer Richtung zwischen einer Abgabe-Position bzw. einer Nichtabgabe-Position zu ermöglichen,
umfasst.

10. Vorrichtung nach Anspruch 9, **dadurch gekennzeichnet, dass** die Harz- und Härterauftragswalzen steuerbar sind, um zur gleichzeitigen Abgabe von Harz und Härter an einander gegenüberliegenden Positionen des Holzteils verschoben zu werden.

11. Vorrichtung nach Anspruch 9, **dadurch gekennzeichnet, dass** jede Auftragswalze mit einem Gefäß (14) in Verbindung steht, das Harz oder Härter enthält, wobei das Gefäß relativ zur Walzenachse (10, 11) rotieren kann und daran axial befestigt ist und mit der Auftragswalze zwischen Abgabe- und Nichtabgabe-Positionen bewegt werden kann.

12. Vorrichtung nach einem der vorhergehenden Ansprüche 9 bis 11, **dadurch gekennzeichnet, dass** die Auftrags- und/oder Gegendruckwalzen in radialer Richtung durch ihre Struktur oder die Wahl des Materials elastisch sind.

13. Vorrichtung nach Anspruch 12, **dadurch gekennzeichnet, dass** die Auftrags- und/oder Gegendruckwalzen mit einer starren Ummantelung (19) versehen sind, die einen biegsamen Kern (20) umgibt, wobei es sich bei der Ummantelung vorzugsweise um eine Stahlummantelung handelt und der Kern vorzugsweise ein Naturkautschuk, ein synthetischer Kautschuk oder ein Kern aus einer Polymerzusammensetzung ist.

14. Vorrichtung nach einem der vorhergehenden Ansprüche 9 bis 13, **dadurch gekennzeichnet, dass** ein Rührwerk (18) zur Corotation mit den Auftragswalzen (4, 5) nahe einer Unterseite des Gefäßes (14) angeordnet ist.

## Revendications

1. Procédé de production d'un bois stratifié constitué de panneaux collés par les bords, en collant les surfaces de jonction verticales de pièces de bois allongées en utilisant un système adhésif durcisseur comprenant au moins une résine et un durcisseur, et dans lequel les pièces de bois sont transportées individuellement à travers une station d'application dans laquelle de la résine est appliquée séparément à une première surface de jonction et un durcisseur est appliqué séparément sur la surface de jonction opposée de telle manière que la résine et le durcisseur sont mélangés au niveau de la jonction lors de l'assemblage des pièces de bois,
**caractérisé en ce que** le procédé comprend les étapes suivantes :
- dépôt de résine sur ladite première surface de jonction, depuis un rouleau applicateur de résine (4) qui est entraîné de façon à tourner autour d'un premier axe vertical ;
- dépôt de durcisseur sur ladite surface de jonction opposée, depuis un rouleau applicateur de durcisseur (5) qui est entraîné de façon à tourner autour d'un deuxième axe vertical ;
- fourniture d'une contre-pression à partir de rouleaux de contre-pression prévus pour coopérer avec les rouleaux applicateurs, et
- commande des rouleaux applicateurs et des rouleaux de contre-pression de façon à les décaler entre des positions alternées pour le dépôt et le non dépôt de résine et de durcisseur, respectivement.

2. Procédé selon la revendication 1, **caractérisé en ce que** les rouleaux applicateurs et les rouleaux de contre-pression sont décalés par un déplacement latéral dans des directions radiales entre les positions de dépôt et de non dépôt.

3. Procédé selon la revendication 1, **caractérisé en ce que** les rouleaux applicateurs et les rouleaux de contre-pression sont décalés par un déplacement vertical dans des directions axiales entre les positions de dépôt et de non dépôt.

4. Procédé selon la revendication 2, **caractérisé en ce que** la résine et le durcisseur sont libérés en des positions longitudinalement espacées par rapport à une direction d'alimentation des pièces de bois.

5. Procédé selon la revendication 3, **caractérisé en ce que** la résine et le durcisseur sont libérés en des positions mutuellement opposées, transversalement à une direction d'alimentation des pièces de bois.

6. Procédé selon la revendication 3 ou 5, **caractérisé en ce que** la résine seule est déposée sur ladite première surface de jonction en coopération avec un rouleau de contre-pression (9) qui est coaxial avec le rouleau applicateur de durcisseur (5) et tournant conjointement avec celui-ci, tandis que le durcisseur seul est déposé sur ladite surface de jonction opposée en coopération avec un rouleau de contre-pression (8) qui est coaxial avec le rouleau applicateur de résine (4) et tournant conjointement avec celui-ci.

7. Procédé selon l'une quelconque des revendications 1 à 6, **caractérisé en ce que** le durcisseur est modifié de façon à avoir une viscosité comprise entre environ 1 000 et environ 7 000 mPa.s, de préférence entre environ 2 000 et environ 4 000 mPa.s, par l'ajout d'un épaississant.

8. Procédé selon la revendication 7, **caractérisé en ce que** le durcisseur est modifié par l'ajout de poly(alcool vinylique), ou de poly(acétate de vinyle), ou leurs mélanges.

9. Dispositif permettant la production de bois stratifié constitué de panneaux collés par les bords, le dispositif comprenant un convoyeur adapté pour faire avancer des pièces de bois individuelles longitudinalement dans le dispositif, **caractérisé en ce qu'**il comprend de plus :
- un rouleau applicateur de résine (4), entraîné de façon à tourner autour d'un premier axe vertical et apte à déposer de la résine sur une première surface de jonction verticale d'une pièce de bois acheminée dans le dispositif,
- un rouleau applicateur de durcisseur (5), entraîné de façon à tourner autour d'un deuxième axe vertical et apte à déposer du durcisseur sur une surface de jonction verticale opposée à ladite première surface de jonction verticale, les rouleaux applicateurs de résine et de durcisseur étant ainsi adaptés pour appliquer de la résine et du durcisseur séparément sur lesdites surfaces de jonction de telle manière que la résine et le durcisseur sont mélangés dans la jonction seulement lors de l'assemblage des pièces de bois ;
- des rouleaux de contre-pression (8, 9) coopérant avec les rouleaux applicateurs de résine et de durcisseur, et
- un moyen de commande pour décaler les rouleaux applicateurs et les rouleaux de contre-pression entre des positions alternées pour le dépôt et le non dépôt de résine ou de durcisseur, dans lequel chaque rouleau applicateur est associé à un rouleau de contre-pression, les rouleaux applicateur et de contre-pression associés étant montés sur paliers sur un axe commun et pouvant être commandés en déplacement vertical pour permettre le décalage dans la direction axiale entre une position de dépôt et une position de non dépôt, respectivement.

10. Dispositif selon la revendication 9, **caractérisé en ce que** les rouleaux applicateurs de résine et de durcisseur peuvent être commandés pour être décalés pour un dépôt simultané de résine et de durcisseur en des positions mutuellement opposées de la pièce de bois.

11. Dispositif selon la revendication 9, **caractérisé en ce que** chaque rouleau applicateur est associé à une cuve (14) contenant de la résine ou du durcisseur, la cuve pouvant tourner par rapport à l'axe de rotation (10, 11) et étant fixée axialement par rapport à celui-ci, et mobile avec le rouleau applicateur entre des positions de dépôt et de non dépôt.

12. Dispositif selon l'une quelconque des revendications 9 à 11, **caractérisé en ce que** les rouleaux applicateurs et/ou de contre-pression sont élastiques dans une direction radiale, par leur structure ou par un choix de matériau.

13. Dispositif selon la revendication 12, **caractérisé en ce que** les rouleaux applicateurs et/ou de contre-pression sont munis d'une enveloppe rigide (19) qui enveloppe un noyau flexible (20), l'enveloppe étant de préférence une enveloppe en acier et le noyau étant de préférence un noyau en caoutchouc naturel, en caoutchouc synthétique ou fait d'une composition de polymère.

14. Dispositif selon l'une quelconque des revendications 9 à 13, **caractérisé en ce qu'**un agitateur (18) est prévu pour tourner conjointement avec les rouleaux applicateurs (4, 5), près d'un fond de la cuve (14).
